(19) Europäisches Patentamt
European Patent Office
Office européen des brevets

(11) EP 2 402 376 A1

(12) **EUROPEAN PATENT APPLICATION**

(43) Date of publication:
**04.01.2012 Bulletin 2012/01**

(21) Application number: **10167603.9**

(22) Date of filing: **29.06.2010**

(51) Int Cl.:
***C08F 10/06*** *(2006.01)* ***C08F 4/659*** *(2006.01)*
***C08F 2/00*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Borealis AG**
**1220 Vienna (AT)**

(72) Inventors:
- **Klimke, Katja**
  **4020, Linz (AT)**
- **Noopila, Tuomas**
  **00250, Helsinki (FI)**
- **Brunnbauer, Gerhard**
  **4100, Ottensheim (AT)**

(74) Representative: **Lindinger, Ingrid**
**Borealis Polyolefine GmbH**
**St.-Peter-Straße 25**
**4021 Linz (AT)**

(54) **Process for producing a prepolymerised catalyst, such prepolymerised catalyst and its use for producing a polymer**

(57) Process for producing a prepolymerised metallocene catalyst system comprising a step of prepolymerising in a continuously operating prepolymerising reactor a solid metallocene catalyst system with at least one $C_2$ to $C_{10}$-alpha-olefin monomer at an average residence time of the solid metallocene catalyst system of more than 30 minutes to 90 min at a temperature within the range of 5 to less than 25°C, in order to obtain a prepolymerised metallocene catalyst system comprising of from 60 to 500 g polyolefin/ g catalyst, the prepolymerised metallocene catalyst system itself and its use.

EP 2 402 376 A1

## Description

The present invention relates to a process for producing a prepolymerised catalyst, to the prepolymerised catalyst and to the use of such prepolymerised catalyst in a process for producing a polymer.

## Background of the invention

WO 2005/005495 discloses a process for polymerising alpha-olefins. In this process alpha-olefins are contacted in a loop reactor with a metallocene-based catalyst. This prepolymerised catalyst is subsequently used in a polymerisation reactor for polymerising the same or different alpha-olefins. This prepolymerised catalyst is used in order to avoid fouling problems occurring when polymer particles adhere to the walls and mechanical parts of a polymerisation reactor.
Reportedly it is thought that this prepolymerisation treatment reduces fouling by preventing early fracture of the catalyst particles. Early fracture produces fine particles which may adhere to reactor walls. Furthermore, a protective shell is formed reducing dissociation from catalyst components which might migrate to the reactor surface and initiate polymer build-up. Finally, prepolymerisation reduces early catalyst activity thereby avoiding overheating. Exemplified is a propylene polymerisation procedure in which a metallocene catalyst, treated with MAO, is subjected to a prepolymerisation with propylene in a loop reactor at a residence time of about 8 minutes and at a prepolymerisation temperature in the range of 30-50°C. The prepolymerised catalyst comprises according to the examples 78-145 g polymer/g catalyst.
In WO 2005/005495 it is further stated that a temperature outside the range of 25 to 70°C fails in giving an advantage and that the optimum balance of the process parameters (temperature in the range of 25 to 70°C and average residence time not more than 30 min) together with the use of a loop prepolymerisation reactor makes it possible to avoid reactor fouling in the successive polymerisation step.
Contrary to the teaching of WO 2005/005495 it is described in EP 1 939 226 that a prepolymerised catalyst can be provided which also avoids reactor fouling in the successive polymerisation step although the average residence time lies above 30 min.
It is further described that a relatively long residence time allows a relatively long time for forming the polyolefin on the catalyst particle which is better for the morphology and results in less heat formation and an improvement of the strength of the catalyst particle. Finally, at such relatively long average residence times the proportion of catalyst particles that were only shortly in the reactor and have a too low amount of polyolefin is very low. Accordingly, a substantial fraction of all produced prepolymerised catalyst particles will have the desired properties. Practically the residence time may be within the range of 31-60 minutes, or 35-60 minutes, such as 35-50 minutes.
The temperature at which the prepolymerisation is carried out is preferably within the range of 25-70°C, more preferably of about 35-60°C. This temperature is selected such that the prepolymerisation reaction is taking place at a relatively low polymerisation rate such that a relatively small amount of polyolefin is formed on the catalyst particles.
The prepolymerised catalyst comprises according to the examples 290-344 g polymer/g catalyst.
In Comparative example 1 of EP 1 939 226 it was shown that if the temperature is 25°C and the average residence time is only 11 min the prepolymerised catalyst comprises only 10 g polymer/g catalyst.

## Summary of the invention

Although a lot of development work has already been done in the field of prepolymerisation of metallocene catalysts, there is still the need for further improved processes that provide prepolymerised metallocene catalysts with a high polymerisation degree and furthermore a narrower molecular weight distribution, a lower average particle size and narrower particle size distribution (PSD) compared to state of the art prepolymerised metallocene catalysts. The prepolymerised catalyst according to the invention is used in a process for producing a polymer, in particular a polymer based on alpha-olefins. This polymer may be a homopolymer or copolymer based on two or more monomers.
Since the prepolymerised catalyst of the present invention has a narrower molecular weight distribution, a lower average particle size and narrower particle size distribution (PSD) compared to state of the art prepolymerised metallocene catalysts, polymers produced with it have - due to replica effect - also a narrower molecular weight distribution and a lower average particle size as morphology of polymers produced is a function of particle size and PSD of catalyst particles.
The invention furthermore provides a process for producing such prepolymerised catalyst. Finally, the present invention relates to the prepolymerised catalyst obtainable with such process for producing a prepolymerised catalyst, and to the use of a prepolymerised catalyst according to the invention in the production of a polymer based on alpha-olefin monomers.
It has now surprisingly been found that the prepolymerisation step must comprise a specifically selected operating window which enables to efficiently prepolymerise the metallocene catalyst.
Thus the present invention provides a process for producing a prepolymerised metallocene catalyst system comprising a step of prepolymerising in a continuously operating prepolymerising reactor a solid metallocene catalyst

system with at least one $C_2$ to $C_{10}$-alpha-olefin monomer at an average residence time of the solid metallocene catalyst system of more than 30 minutes to 90 min at a temperature within the range of 5 to less than 25°C, in order to obtain a prepolymerised metallocene catalyst system comprising of from 60 to 500 g polyolefin/ g catalyst.

## Detailed disclosure of the invention

### a. Prepolymerisation process

The prepolymerisation process comprises the prepolymerisation of the solid metallocene catalyst with at least one alpha-olefin monomer.

In the prepolymerisation less than about 15 weight % of the total amount of the polymer is to be formed on the catalyst particle. Such a limitation of the amount of the polyolefin on the catalyst particle is preferably not more than 10 weight %. This provides optimal properties for the melt flow rate, the weight average molecular weight distribution and reduces the occurrence of odour and results in improvement of taste in the ultimately produced polymer. Furthermore it is achieved that the final polymer has less xylene cold solubles (XCS), higher bulk density and that the yield of polymer produced is increased.

The prepolymerisation is carried out in a continuously operating reactor at an average residence time of more than 30 minutes up to 90 min. Preferably the average residence time is within the range of 31 to 60 minutes and more preferably within the range of 32 to 45 minutes.

The temperature at which the prepolymerisation is carried out is within the range of 5 to less than 25°C, preferably in the range of 15 to 24°C and more preferably in the range of 20 to 23°C.

The prepolymerisation may be carried out in any type of continuously operating polymerisation reactor. Suitable reactors are continuous stirred tank reactors (CSTR), a loop reactor or a comparted reactor such as disclosed in WO 97/33920 or WO 00/21656 or a cascade of two or more reactors may be used.
Although the prepolymerisation may be carried out in a slurry polymerisation or a gas phase polymerisation, it is preferred to carry out the prepolymerisation as a slurry polymerisation, more preferably in a loop prepolymerisation reactor.

### b. Prepolymerisation catalyst

The catalyst to be subjected to the prepolymerisation may be any metallocene catalyst suitable for producing polyolefins.

### Metallocene-based catalyst

Suitable metallocene-based catalysts comprise
a transition metal compound of formula (I)

$$R_n(Cp')_2MX_2 \qquad (I)$$

wherein

| | |
|---|---|
| "M" | is zirconium (Zr) or hafnium (Hf), |
| each "X" | is independently a monovalent anionic σ-ligand, |
| each "Cp' " | is a cyclopentadienyl-type organic ligand independently selected from the group consisting of substituted cyclopentadienyl, substituted indenyl, substituted tetrahydroindenyl, and substituted or unsubstituted fluorenyl, said organic ligands coordinate to the transition metal (M), |
| "R" | is a bivalent bridging group linking said organic ligands (Cp'), |
| "n" | is 1 or 2, preferably 1. |

The term "σ-ligand" is understood in the whole description in a known manner, i.e. a group bound to the metal via a sigma bond. Thus the anionic ligands "X" can independently be halogen or be selected from the group consisting of R', OR', $SiR'_3$, $OSiR'_3$, $OSO_2CF_3$, OCOR', SR', $NR'_2$ or $PR'_2$ group wherein R' is independently hydrogen, a linear or branched, cyclic or acyclic, $C_1$ to $C_{20}$ alkyl, $C_2$ to $C_{20}$ alkenyl, $C_2$ to $C_{20}$ alkynyl, $C_3$ to $C_{12}$ cycloalkyl, $C_6$ to $C_{20}$ aryl, $C_7$ to $C_{20}$ arylalkyl, $C_7$ to $C_{20}$ alkylaryl, $C_8$ to $C_{20}$ arylalkenyl, in which the R' group can optionally contain one or more heteroatoms belonging to groups 14 to 16. In a preferred embodiments the anionic ligands "X" are identical and either halogen, like Cl, or methyl or benzyl.

A preferred monovalent anionic ligand is halogen, in particular chlorine (Cl).

The substituted cyclopentadienyl-type ligand(s) may have one or more substituent(s) being selected from the

group consisting of halogen, hydrocarbyl (e.g. $C_1$ to $C_{20}$ alkyl, $C_2$ to $C_{20}$ alkenyl, $C_2$ to $C_{20}$ alkynyl, , $C_3$ to $C_{20}$ cycloalkyl, like $C_1$ to $C_{20}$ alkyl substituted $C_5$ to $C_{20}$ cycloalkyl, $C_6$ to $C_{20}$ aryl, $C_5$ to $C_{20}$ cycloalkyl substituted $C_1$ to $C_{20}$ alkyl wherein the cycloalkyl residue is substituted by $C_1$ to $C_{20}$ alkyl, $C_7$ to $C_{20}$ arylalkyl, $C_3$ to $C_{12}$ cycloalkyl which contains 1, 2, 3 or 4 heteroatom(s) in the ring moiety, $C_6$ to $C_{20}$-heteroaryl, $C_1$ to $C_{20}$-haloalkyl, -SiR"$_3$ , -SR", -PR"$_2$ or -NR"$_2$, each R" is independently a hydrogen or hydrocarbyl (e. g. $C_1$ to $C_{20}$ alkyl, $C_1$ to $C_{20}$ alkenyl, $C_2$ to $C_{20}$ alkynyl, $C_3$ to $C_{12}$ cycloalkyl, or $C_6$ to $C_{20}$ aryl) or e.g. in case of -NR"$_2$, the two substituents R" can form a ring, e.g. five-or six-membered ring, together with the nitrogen atom wherein they are attached to.

Further "R" of formula (I) is preferably a bridge of 1 to 4 atoms, such atoms being independently carbon (C), silicon (Si), germanium (Ge) or oxygen (O) atom(s), whereby each of the bridge atoms may bear independently substituents, such as $C_1$ to $C_{20}$-hydrocarbyl, tri($C_1$ to $C_{20}$-alkyl)silyl, tri($C_1$ to $C_{20}$-alkyl)siloxy and more preferably "R" is a one atom bridge like e.g. -SiR"'$_2$-, wherein each R"' is independently $C_1$ to $C_{20}$-alkyl, $C_2$ to $C_{20}$-alkenyl, $C_2$ to $C_{20}$-alkynyl, $C_3$ to $C_{12}$ cycloalkyl, $C_6$ to $C_{20}$-aryl, alkylaryl or arylalkyl, or tri($C_1$ to $C_{20}$ alkyl)silyl-residue, such as trimethylsilyl-, or the two R"' can be part of a ring system including the Si bridging atom.

In a preferred embodiment the transition metal compound has the formula (II)

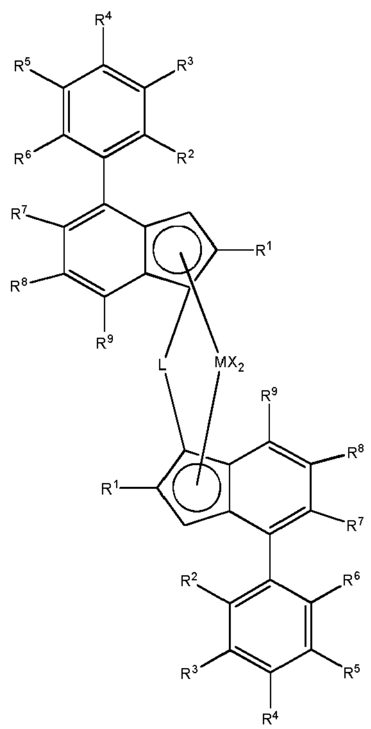

wherein

M is zirconium (Zr) or hafnium (Hf), preferably zirconium (Zr),

X are ligands with a σ-bond to the metal "M", preferably those as defined above for formula (I), preferably chlorine (Cl) or methyl ($CH_3$), the former especially preferred,

$R^1$ are equal to or different from each other, preferably equal to, and are selected from the group consisting of linear saturated $C_1$ to $C_{20}$ alkyl, linear unsaturated $C_1$ to $C_{20}$ alkyl, branched saturated $C_1$-$C_{20}$ alkyl, branched unsaturated $C_1$ to $C_{20}$ alkyl, $C_3$ to $C_{20}$ cycloalkyl, $C_6$ to $C_{20}$ aryl, $C_7$ to $C_{20}$ alkylaryl, and $C_7$ to $C_{20}$ arylalkyl, optionally containing one or more heteroatoms of groups 14 to 16 of the Periodic Table (IUPAC), preferably are equal to or different from each other, preferably equal to, and are $C_1$ to $C_{10}$ linear or branched hydrocarbyl, more preferably are equal to or different from each other, preferably equal to, and are $C_1$ to $C_6$ linear or branched alkyl,

$R^2$ to $R^6$ are equal to or different from each other and are selected from the group consisting of hydrogen, linear saturated $C_1$-$C_{20}$ alkyl, linear unsaturated $C_1$-$C_{20}$ alkyl, branched saturated $C_1$-$C_{20}$ alkyl, branched un-

saturated $C_1$-$C_{20}$ alkyl, $C_3$-$C_{20}$ cycloalkyl, $C_6$-$C_{20}$ aryl, $C_7$-$C_{20}$ alkylaryl, and $C_7$-$C_{20}$ arylalkyl, optionally containing one or more heteroatoms of groups 14 to 16 of the Periodic Table (IUPAC), preferably are equal to or different from each other and are $C_1$ to $C_{10}$ linear or branched hydrocarbyl, more preferably are equal to or different from each other and are $C_1$ to $C_6$ linear or branched alkyl,

$R^7$ and $R^8$ are equal to or different from each other and selected from the group consisting of hydrogen, linear saturated $C_1$ to $C_{20}$ alkyl, linear unsaturated $C_1$ to $C_{20}$ alkyl, branched saturated $C_1$ to $C_{20}$ alkyl, branched unsaturated $C_1$ to $C_{20}$ alkyl, $C_3$ to $C_{20}$ cycloalkyl, $C_6$ to $C_{20}$ aryl, $C_7$ to $C_{20}$ alkylaryl, $C_7$ to $C_{20}$ arylalkyl, optionally containing one or more heteroatoms of groups 14 to 16 of the Periodic Table (IUPAC), $SiR^{10}_3$, $GeR^{10}_3$, $OR^{10}$, $SR^{10}$ and $NR^{10}_2$, wherein

$R^{10}$ is selected from the group consisting of linear saturated $C_1$-$C_{20}$ alkyl, linear unsaturated $C_1$ to $C_{20}$ alkyl, branched saturated $C_1$ to $C_{20}$ alkyl, branched unsaturated $C_1$ to $C_{20}$ alkyl, $C_3$ to $C_{20}$ cycloalkyl, $C_6$ to $C_{20}$ aryl, $C_7$ to $C_{20}$ alkylaryl, and $C_7$ to $C_{20}$ arylalkyl, optionally containing one or more heteroatoms of groups 14 to 16 of the Periodic Table (IUPAC), and/or

$R^7$ and $R^8$ being optionally part of a $C_4$ to $C_{20}$ carbon ring system together with the indenyl carbons to which they are attached, preferably a $C_5$ ring, optionally one carbon atom can be substituted by a nitrogen, sulfur or oxygen atom,

$R^9$ are equal to or different from each other and are selected from the group consisting of hydrogen, linear saturated $C_1$ to $C_{20}$ alkyl, linear unsaturated $C_1$ to $C_{20}$ alkyl, branched saturated $C_1$ to $C_{20}$ alkyl, branched unsaturated $C_1$ to $C_{20}$ alkyl, $C_3$ to $C_{20}$ cycloalkyl, $C_6$ to $C_{20}$ aryl, $C_7$ to $C_{20}$ alkylaryl, $C_7$ to $C_{20}$ arylalkyl, $OR^{10}$, and $SR^{10}$, preferably $R^9$ are equal to or different from each other and are H or $CH_3$, wherein $R^{10}$ is defined as before,

L is a bivalent group bridging the two indenyl ligands, preferably being a $C_2R^{11}_4$ unit or a $SiR^{11}_2$ or $GeR^{11}_2$, wherein,

$R^{11}$ is selected from the group consisting of H, linear saturated $C_1$ to $C_{20}$ alkyl, linear unsaturated $C_1$ to $C_{20}$ alkyl, branched saturated $C_1$ to $C_{20}$ alkyl, branched unsaturated $C_1$ to $C_{20}$ alkyl, $C_3$ to $C_{20}$ cycloalkyl, $C_6$ to $C_{20}$ aryl, $C_7$ to $C_{20}$ alkylaryl or $C_7$ to $C_{20}$ arylalkyl, optionally containing one or more heteroatoms of groups 14 to 16 of the Periodic Table (IUPAC), preferably $Si(CH_3)_2$, $SiCH_3C_6H_{11}$, or $SiPh_2$,
wherein $C_6H_{11}$ is cyclohexyl.

Preferably the transition metal compound of formula (II)is $C_2$-symmetric or pseudo-$C_2$-symmetric. Concerning the definition of symmetry it is referred to Resconi et al. Chemical Reviews, 2000, Vol. 100, No. 4 1263 and references herein cited.

Preferably the residues $R^1$ are equal to or different from each other, more preferably equal, and are selected from the group consisting of linear saturated $C_1$ to $C_{10}$ alkyl, linear unsaturated $C_1$ to $C_{10}$ alkyl, branched saturated $C_1$ to $C_{10}$ alkyl, branched unsaturated $C_1$ to $C_{10}$ alkyl and $C_7$ to $C_{12}$ arylalkyl. Even more preferably the residues $R^1$ are equal to or different from each other, more preferably equal, and are selected from the group consisting of linear saturated $C_1$ to $C_6$ alkyl, linear unsaturated $C_1$ to $C_6$ alkyl, branched saturated $C_1$ to $C_6$ alkyl, branched unsaturated $C_1$ to $C_6$ alkyl and $C_7$ to $C_{10}$ arylalkyl. Yet more preferably the residues $R^1$ are equal to or different from each other, more preferably equal, and are selected from the group consisting of linear or branched $C_1$ to $C_4$ hydrocarbyl, such as for example methyl or ethyl.

Preferably the residues $R^2$ to $R^6$ are equal to or different from each other and linear saturated $C_1$ to $C_4$ alkyl or branched saturated $C_1$ to $C_4$ alkyl. Even more preferably the residues $R^2$ to $R^6$ are equal to or different from each other, more preferably equal, and are selected from the group consisting of methyl, ethyl, iso-propyl and tert-butyl.

Preferably $R^7$ and $R^8$ are equal to or different from each other and are selected from hydrogen and methyl, or they are part of a 5-methylene ring including the two indenyl ring carbons to which they are attached. In another preferred embodiment, $R^7$ is selected from $OCH_3$ and $OC_2H_5$, and $R^8$ is tert-butyl.

Preferred are the following compounds:

bis(n-butylcyclopentadienyl)Hf dibenzyl,
bis(methylcyclopentadienyl)Hf dibenzyl,
bis(1,2-dimethylcyclopentadienyl)Hf dibenzyl,
bis(n-propylcyclopentadienyl)Hf dibenzyl,
bis(i-propylcyclopentadienyl)Hf dibenzyl,
bis(1,2,4-trimethylcyclopentadienyl)Zr dibenzyl,

bis(tetrahydroindenyl)Zr dibenzyl,
bis(n-butylcyclopentadienyl)Hf $(CH_2SiMe_3)_2$,
bis(n-propylcyclopentadienyl)Hf $(CH_2SiMe_3)_2$,
bis(i-propylcyclopentadienyl)Hf $(CH_2SiMe_3)_2$
bis(1,2,4-trimethylcyclopentadienyl)Zr$(CH_2SiMe_3)_2$,
rac-dimethylsilanediylbis(2-methyl-4-phenylindenyl)zirconium dichloride,
rac-cyclohexyl(methyl)silanediylbis[2-methyl-4-(4'-*tert*-butylphenyl)indenyl]zirconium dichloride,
rac-dimethylsilanediyl[2-methyl-4-(4'-*tert*-butylphenyl)indenyl] [2-isopropyl-4-(4'-*tert*-butylphenyl)indenyl]zirconium dichloride,
wherein Me is methyl.

More preferred compounds are Hf dibenzyl and Zr dichloride compounds of the above list, i.e.

bis(n-butylcyclopentadienyl)Hf dibenzyl,
bis(methylcyclopentadienyl)Hf dibenzyl,
bis(1,2-dimethylcyclopentadienyl)Hf dibenzyl,
bis(n-propylcyclopentadienyl)Hf dibenzyl,
bis(i-propylcyclopentadienyl)Hf dibenzyl,
rac-dimethylsilanediylbis(2-methyl-4-phenylindenyl)zirconium dichloride,
rac-cyclohexyl(methyl)silanediylbis[2-methyl-4-(4'-tert-butylphenyl)indenyl] zirconium dichloride and
rac-dimethylsilanediyl[2-methyl-4-(4'-tert-butylphenyl)indenyl] [2-isopropyl-4-(4'-tert-butylphenyl)indenyl]zirconium dichloride.

In a most preferred embodiment the transition metal compound is racmethyl(cyclohexyl)silanediyl bis(2-methyl-4-(4-tert-butylphenyl)indenyl)zirconium dichloride., rac-dimethylsilanediyl bis(2-methyl-4-phenyl-1,5,6,7-tetrahydro-s-indacen-1-yl)zirconium dichloride and rac-dimethylsilanediyl bis(2-methyl-4-phenyl-5-methoxy-6-tert-butylindenyl)zirconium dichloride.

Metallocenes are generally used in combination with some form of activator, respectively cocatalyst comprising an element of group 13 of the periodic table (IUPAC), for instance the cocatalyst comprises a compound of Al.

The term "solid metallocene catalyst system" mentioned herein includes the metallocene component and the cocatalyst respectively activator.

Examples of such cocatalyst are organo-aluminium compounds, such as aluminoxane compounds.

Such compounds of Al, preferably aluminoxanes, can be used as the only compound in the cocatalyst or together with other cocatalyst compound(s). Thus besides or in addition to the compounds of Al, i.e. the aluminoxanes, other cation complex forming cocatalyst compounds, like boron compounds can be used. Said cocatalysts are commercially available or can be prepared according to the prior art literature. Preferably however in the manufacture of the solid catalyst system only compounds of Al as cocatalyst are employed.

In particular preferred cocatalysts are the aluminoxanes, in particular the $C_1$ to $C_{10}$-alkylaluminoxanes, most particularly methylaluminoxane (MAO).

In case of aluminoxanes, such as methylaluminumoxane (MAO), the amount of Al, provided by aluminoxane, can be chosen to provide an Al/transition metal (M) molar ratio e.g. in the range of 50 to 800, preferably in the range of 150 to 600, and nore preferably in the range of 200 to 400 mol/mol.

The metallocene-based catalyst may be supported using a porous particulate material, such as for example, clay, talc, inorganic oxides, inorganic chlorides and resinous materials such as polyolefin or polymeric compounds. Desirably, the support materials are porous inorganic oxide materials. Silica, alumina, silica-alumina, and mixtures thereof are particularly desirable. Other inorganic oxides that may be employed either alone or in combination with the silica, alumina or silica-alumina are magnesia, titania, zirconia, and the like. A particularly desirable support material is particulate silicon dioxide.

Nevertheless it is appreciated that the solid catalyst system is featured by the fact that it is self-supported, i.e. it does not comprise any catalytically inert support material, like for instance silica, alumina or $MgCl_2$ or porous polymeric material, which is otherwise commonly used in heterogeneous catalyst systems, i.e. the catalyst is not supported on external support or carrier material. As a consequence of that the solid catalyst system (SCS) is self-supported and it has a rather low surface area.

In one embodiment the solid metallocene catalyst system is obtained by the emulsion/solidification technology, the basic principles of which are described in WO 03/051934. This document is herewith included in its entirety by reference.

Hence the solid catalyst system is preferably in the form of solid catalyst particles, obtainable by a process comprising the steps of

a) preparing a solution of one or more catalyst components;

b) dispersing said solution in a second solvent to form an emulsion in which said one or more catalyst components are present in the droplets of the dispersed phase,

c) solidifying said dispersed phase to convert said droplets to solid particles and optionally recovering said particles to obtain said catalyst.

Preferably a first solvent, more preferably a first organic solvent, is used to form said solution. Still more preferably the organic solvent is selected from the group consisting of a linear alkane, cyclic alkane, aromatic hydrocarbon and halogen-containing hydrocarbon.

Moreover the second solvent forming the continuous phase is an inert solvent towards to catalyst components. The second solvent might be immiscible towards the solution of the catalyst components at least under the conditions (like temperature) during the dirpersing step. The term "immiscible with the catalyst solution" means that the second solvent (continuous phase) is fully immiscible or partly immiscible i.e. not fully miscible with the dispersed phase solution.

Preferably the immiscible solvent comprises a fluorinated organic solvent and/or a functionalized derivative thereof, still more preferably the immiscible solvent comprises a semi-, highly- or perfluorinated hydrocarbon and/or a functionalized derivative thereof. It is in particular preferred, that said immiscible solvent comprises a perfluorohydrocarbon or a functionalized derivative thereof, preferably $C_3$-$C_{30}$ perfluoroalkanes, -alkenes or - cycloalkanes, more preferred $C_4$-$C_{10}$ perfluoro-alkanes, -alkenes or -cycloalkanes, particularly preferred perfluorohexane, perfluoroheptane, perfluorooctane or perfluoro (methylcyclohexane) or perfluoro (1,3-dimethylcyclohexane or a mixture thereof.

Furthermore it is preferred that the emulsion comprising said continuous phase and said dispersed phase is a bi-or multiphasic system as known in the art. An emulsifier may be used for forming and stabilising the emulsion. After the formation of the emulsion system, said catalyst is formed in situ from catalyst components in said solution.

In principle, the emulsifying agent may be any suitable agent which contributes to the formation and/or stabilization of the emulsion and which does not have any adverse effect on the catalytic activity of the catalyst. The emulsifying agent may e.g. be a surfactant based on hydrocarbons optionally interrupted with (a) heteroatom(s), preferably halogenated hydrocarbons optionally having a functional group, preferably semi-, highly- or perfluorinated hydrocarbons as known in the art. Alternatively, the emulsifying agent may be prepared during the emulsion preparation, e.g. by reacting a surfactant precursor with a compound of the catalyst solution. Said surfactant precursor may be a halogenated hydrocarbon with at least one functional group, e.g. a highly fluorinated C1-n (suitably C4-30-or C5-15) alcohol (e.g. highly fluorinated heptanol, octanol or nonanol), oxide (e.g. propenoxide) or acrylate ester which reacts e.g. with a cocatalyst component, such as aluminoxane to form the "actual" surfactant.

In principle any solidification method can be used for forming the solid particles from the dispersed droplets. According to one preferable embodiment the solidification is effected by a temperature change treatment. Hence the emulsion subjected to gradual temperature change of up to 10 °C/min, preferably 0.5 to 6 °C/min and more preferably 1 to 5 °C/min. Even more preferred the emulsion is subjected to a temperature change of more than 40 °C, preferably more than 50 °C within less than 10 seconds, preferably less than 6 seconds.

For further details, embodiments and examples of the continuous and dispersed phase system, emulsion formation method, emulsifying agent and solidification methods reference is made e.g. to the above cited international patent application WO 03/051934.

All or part of the preparation steps can be done in a continuous manner. Reference is made to WO 2006/069733 describing principles of such a continuous or semicontinuous preparation methods of the solid catalyst types, prepared via emulsion/solidification method.

The above described catalyst components are prepared according to the methods described in WO 01/48034.

It is further possible to polymerise at least one olefin monomer in the presence of the catalyst system before further use as described in WO2010/052263.

The olefin monomer is preferably an $\alpha$-olefin monomers, each having 2 to 20 carbon atoms. The olefin, like $\alpha$-olefin, can be linear or branched, cyclic or acyclic, aromatic or aliphatic. Preferred examples are ethylene, propylene, 1-butene, 1-pentene, 2-methyl-1-butene, 3-methyl-1-butene, 1-hexene, 2-methyl-1-pentene, 3-methyl-1-pentene, 4-methyl-1-pentene, 2-ethyl-1-butene, 2,3-dimethyl-1-butene, 1-octene, styrene, and vinylcyclohexane.

It is in particular preferred that the olefin monomer corresponds to the polymer which shall be produced with the inventive solid catalyst composition.

This polymerisation step belongs to the catalyst preparation, whereas the subsequent prepolymerisation step, as described below, belongs to the polymerisation process.

**c. Prepolymerisation step**

The prepolymerised catalyst may be produced using at least one alpha-olefin, such as any known olefin monomer used in polymerisation and copolymerisation, such as $C_2$-$C_{10}$ alpha-olefins. Preferably $C_2$-$C_{10}$ olefins, such as

ethylene, propylene, 1-butene, 1-pentene, 1-hexene, 4-methyl-1-pentene, 1-heptene, 1-octene, 1-nonene and 1-decene as well as mixtures thereof are used. Most preferred alpha-olefins are ethylene and propylene with propylene especially preferred.

The prepolymerisation may be carried out in the presence of a diluent. Suitable diluents are $C_3$ to $C_{10}$-hydrocarbons.

The amount of diluent may be adjusted according to particular needs but is usually not exceeding 90 weight % of the total amount of diluent and monomers. In many cases the use of a diluent is not necessary. Preferably the prepolymerisation is conducted in liquid propylene without an inert diluent. Normally propylene contains a small fraction, typically below 10 % by weight and preferably below 5 % by weight, of aliphatic hydrocarbons, such as propane, ethane and butane as impurities. However, in the context of the present patent application these impurities should not be understood as inert diluents.

Additives may be added. Suitable additives comprise anti-static agents. As mentioned above additives, such as poison scavengers, may be used as well.

Hydrogen may be added in order to activate the catalyst system and in order to control the weight average molecular weight of the polyolefin produced during the prepolymerisation.

The catalyst may be transferred into the prepolymerisation reactor by any means known in the art. It is thus possible to suspend the catalyst in a diluent and maintain it as homogeneous slurry. Especially preferred it is to use oil having a viscosity form 20 to 1500 mPa-s as diluent, as disclosed in WO-A-2006/063771. It is also possible to mix the catalyst with a viscous mixture of grease and oil and feed the resultant paste into the prepolymerisation reactor. Further still, it is possible to let the catalyst settle and introduce portions of thus obtained catalyst mud into the prepolymerisation reactor in a manner disclosed, for instance, in EP 0 428 054.

If the prepolymerisation is conducted as a slurry polymerisation, any suitable reactor type known in the art may be used. A continuous stirred tank reactor and a loop reactor are suitable examples of useful reactor types. Especially, a loop reactor is preferred because of its flexibility.

The slurry prepolymerisation may be conducted in normal liquid conditions or alternatively so that the temperature and the pressure within the reactor exceed the critical temperature and pressure of the fluid mixture within the reactor. Such a polymerisation method is called supercritical slurry polymerisation. Description of liquid slurry polymerisation is given, among others, in US 3 262 922.

In a loop reactor the slurry comprising the monomer(s) and the growing polymer particles including the catalyst fragmented therein is circulated along a closed pipe by means of a pump. The velocity of the fluid is maintained at a level which is sufficient to keep the particles from settling within the reactor. The pipe is jacketed and a heat transfer medium is circulated in the jacket to maintain the temperature within the loop reactor constant. There are connections for introducing the reactants, such as monomer, eventual comonomers and hydrogen, as well as the catalyst components into the reactor. Further, there is at least one connection for withdrawing the polymer slurry from the reactor.

The pressure in the prepolymerisation reactor is generally selected such that the pressure is higher than or equal to the pressure in the subsequent polymerisation. Accordingly, the pressure is generally selected in between the range from about 20-80 bar. The pressure is selected such that the fluid contained in the reactor, preferably loop reactor remains either in liquid or supercritical state at the operating temperature.

A small amount of comonomer (ethylene and/or a $C_4$-$C_{10}$ alpha-olefin) may be introduced. The amount of comonomer is less than 5 weight % in order to avoid the occurrence of sticky particles which are caused by the reduced crystallinity of the prepolymer in the prepolymerised catalyst particles.

The reactants, catalyst, alpha-olefin monomer, comonomer, additives and the like, may be introduced in the prepolymerisation reaction or reactor continuously or intermittently. Continuous addition is preferred to improve process stability. The prepolymerised catalyst may be withdrawn from the prepolymerisation reaction or reactor either continuously or intermittently. Again a continuous withdrawal is preferred.

It is noted that the reactants are to be free from catalyst poisons such as oxygen, moisture and oxygen containing or sulphur containing compounds. The catalyst poisons may be removed by treatment of the reactants in a known manner with molecular sieves, metal oxide catalysts and the like.

The so obtained prepolymerised solid metallocene catalyst system comprises of from 60 to 500 g polyolefin/ g catalyst, preferably 80 to 400 g polyolefin/ g catalyst and most preferably 90 to 300 g polyolefin/ g catalyst.

The average particle size of the inventive prepolymerised solid metallocene catalyst system is in the range of 0.25 mm to 0.60 mm, preferably in the range of 0.35 mm to 0.55 mm.

MWD is in the range of 3 to 10, preferably in the range of 4 to 8 and more preferably in the range of 4.5 to 7.5.

In a further embodiment of the present invention the prepolymerised solid metallocene catalyst system is used for producing polymers.

Examples of polymers that can be produced with the use of the inventive prepolymerised solid metallocene catalyst system are: high density polyethylene, linear low density polyethylene, polypropylene, random copolymers of ethylene and propylene and of ethylene or propylene with other alpha-olefins, ethylene-propylene rubbers, ethylene-propylene-diene rubbers and heterophasic copolymers.
Preferably the prepolymerised solid metallocene catalyst system according to the present invention is used for producing a propylene homo- or copolymer and more preferably a propylene homopolymer.

**d. Polymerisation**

The polymerisation may be carried out using the same, different or a mixture of alpha-olefins used in the prepolymerisation. Polymers, in particular multimodal polymers, may be prepared, for example, by two or more stage polymerisation or by the use of two or more different polymerisation catalysts and/or by the use of different polymerisation conditions in a one stage polymerisation. In principle any polymerisation method including solution, slurry and gas phase polymerisation can be used for producing polymers using the prepolymerised catalyst. The temperature in the polymerisation reactor needs to be sufficiently high to reach an acceptable activity of the catalyst. On the other hand, the temperature should not exceed the softening temperature of the polymer.
Preferably, however, the polymers are produced in a two or three stage polymerisation. Suitable polymerisation processes include liquid phase polymerisation, e.g. solution or slurry polymerisation, preferably in slurry polymerisation in liquid monomer, or gas phase polymerisation. Preferably the polymerisation involves at least one slurry polymerisation (e.g. in a loop reactor).
The polymers may comprise a low molecular weight (LMW) component and a high molecular weight (HMW) component. In one preferable embodiment one of the above mentioned LMW and HMW components is polymerised as a slurry polymerisation (e.g. in a slurry tank or loop reactor) and the other as a gas phase polymerisation (e.g. in a gas reactor), in any order.
The polymers using the prepolymerised catalyst of the present invention are preferably produced in such a reactor system. Particularly preferably the polymer is formed at least in a two stage process comprising a slurry loop polymerisation followed by a gas phase polymerisation. A preferred loop reactor-gas phase reactor system usable in this invention is generally known as BORSTAR® reactor system. The multistage polymerisation is preferably carried out using the same metallocene catalyst system in each stage. Moreover, at least one propylene polymer is preferably polymerised in the slurry reactor, preferably in a loop reactor, and another propylene polymer in the gas phase reactor in the presence of the reaction product of the slurry reactor.
The conditions used in such processes are well known. For slurry reactors, the reaction temperature will generally be in the range 60 to 110 °C (e.g. 85-110 °C), the reactor pressure will generally be in the range 5 to 80 bar (e.g. 50-65 bar), and the residence time will generally be in the range 0.3 to 5 hours (e.g. 0.5 to 2 hours).Preferably the polymerisation is then conducted in liquid monomer. Preferably a separate inert diluent is not used, but if used it will generally be an aliphatic hydrocarbon having a boiling point in the range -70 to +100 °C. Preferred diluents include hydrocarbons such as propane or isobutane. Hydrogen is also preferably fed into the reactor to function as a molecular weight regulator.
If gas phase reactions are employed then conditions are preferably as follows:_

- the temperature is within the range of 50°C to 130°C, preferably between 60°C and 115°C and more preferably

between 65°C and 90°C,

- the pressure is within the range of 10 bar to 60 bar, preferably between 10 bar to 40 bar,
- hydrogen can be added for controlling the molar mass in a manner known per se,
- the residence time is typically 1 to 8 hours.

The gas used will commonly be a non-reactive gas such as nitrogen or low boiling point hydrocarbons such as propane together with monomer (e.g. propylene) and eventual comonomers (e.g. ethylene and/or 1-butene). If desired, the polymerisation may be effected in a known manner under supercritical conditions in the slurry, preferably loop reactor, and/or as a condensed mode in the gas phase reactor.
The gas phase polymerisation may be conducted in a manner known in the art, such as in a bed fluidised by gas feed or in mechanically agitated bed. Also fast fluidisation may be utilised.
Preferably, one propylene polymer, which may be a propylene homopolymer or a copolymer of propylene and another alpha-olefin, like ethylene or an alpha-olefin having 4 to 10 carbon atoms, is produced in a continuously operating loop reactor where propylene is polymerised, optionally together with other alpha-olefins, in the presence of a polymerisation catalyst as stated below and a chain transfer agent such as hydrogen.
The other propylene polymer can then be formed in a gas phase reactor, preferably using the same catalyst.
According to one preferred embodiment of the invention the polymer slurry withdrawn from the loop reactor is directly introduced into a gas phase reactor, without a flash step between the reactors. Such a process is disclosed in WO-A-98/58975, WO-A-98/58976 and WO-A-98/58977.

The polymer produced by the process of the invention may be unimodal or multimodal. Unimodal polymers have a relatively narrow molecular weight distribution with a polydispersity index, defined as Mw/Mn, being lower than 4 and preferably lower than 3, and typically close to 2. Multimodal polymers have a polydispersity index of more than 4 and they comprise at least a low molecular weight component and a high molecular weight component. Preferably, the high molecular weight component also has a higher content of comonomer than the low molecular weight component.

The term "copolymer" as used herein is intended to encompass polymers comprising repeat units deriving from one monomer and at least one other monomer. In typical copolymers at least 0.25 mol%, preferably at least 0.5 mol%, e.g. at least 1 mol%, such as up to 10 mol% of repeat units derive from the comonomer. In contrast the term "homopolymer" as used herein is intended to encompass polymers which consist essentially of repeat units deriving from one monomer. Homopolymers may, for example, comprise at least 99.8 %, preferably at least 99.9 %, by weight of repeat units deriving from the monomer.

It is also possible to conduct the polymerisation in gas phase, for instance in a fluidised bed reactor. Processes for polymerisation olefins in fluidised bed reactors are disclosed, among others, in EP 0 173 261 and US 4 543 399.

A fluidised bed reactor typically contains a gas entry zone, above which there is a reaction zone, above which there is a freeboard, or a settling zone. The reaction zone is typically of cylindrical shape, usually with a round cross-sectional area. The freeboard may comprise an upward widening conical section and optionally a cylindrical section having a larger diameter that the reaction zone. However, the freeboard may also be cylindrical having the same diameter as the reaction zone.

In a gas phase fluidised bed reactor the polymer particles are suspended in an upwardly flowing gas stream.

The gas enters into the reactor from the bottom. It then passes a perforated metal plate, sometimes called a gas distributor plate or a fluidisation grid, which distributes the gas over the whole cross-sectional area of the reactor. The superficial gas velocity must exceed the minimum fluidisation velocity to fluidise the polymer. Unreacted gas is withdrawn from the top of reactor. The withdrawn gas is then compressed, cooled and reintroduced into the bottom of the reactor. In addition monomer(s) and optionally hydrogen are added into the recycle gas stream to maintain a constant gas composition in the reactor.

In order to improve the temperature control in the reactor it is known to cool the fluidisation gas so that at least a part of it condenses. The condensed gas evaporates when it enters the reactor and thus assists in removing the heat of reaction. Catalyst and/or polymer from preceding polymerisation stages is introduced into the fluidised bed. The height of the bed is maintained at a constant level by withdrawing a mixture of polymer and gas from the reactor. The withdrawal may be done intermittently or, preferably, continuously. A process for continuous withdrawal of polymer is disclosed, among others, in WO-A-00/29452.

**e. Polymer recovery**

After the polymerisation powder withdrawn from the polymerisation process is dried and granulated as is known in the art.

The hydrocarbons are typically removed by treating the polymer at an elevated temperature and/or reduced pressure with a gas stream, such as nitrogen stream. The gas stream may also contain components to deactivate the catalyst, such as moisture and oxygen. Typically, the polymer powder may be contacted with a nitrogen stream for a period of about 30 minutes to 3 hours at a temperature of about 40 to 70°C at atmospheric pressure. The nitrogen may contain from 100 ppm to 5% by weight of water vapour.

After the removal of residual hydrocarbons the polymer powder is mixed with desired additives and extruded.

The desired additives include antioxidants, process stabilisers, antiblock and slip agents, antistatic agents, catalyst neutralizers, processing aids, nucleating agents and fillers. The extrusion is preferably conducted in a twin screw extruder, either with co-rotating or counterrotating screws. The extrusion conditions depend on the type of the polymer, additiveformulation and the intended use of the polymer. The temperature may range from 250 to 350°C. The average residence time of the polymer melt in the extruder may be from 10 seconds to 5 minutes, preferably from 30 seconds to 2 minutes, again depending on the polymer and its use.

Mentioned and other characteristics and features of the prepolymerised catalyst, its process for producing and its use in a process for producing a polymer are further illustrated in a nonlimiting manner in the following examples.

**METHODS**

**Mw, Mn, MWD**

Mw/Mn/MWD are measured by Gel Permeation Chromatography (GPC) according to the following method:

The weight average molecular weight (Mw), the number average molecular weight (Mn), and the molecular weight

distribution (MWD = Mw/Mn) is measured by a method based on ISO 16014-1:2003 and ISO 16014-4:2003. A Waters Alliance GPCV 2000 instrument, equipped with refractive index detector and online viscosimeter is used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 mL/min. 216.5 μL of sample solution are injected per analysis. The column set is calibrated using relative calibration with 19 narrow MWD polystyrene (PS) standards in the range of 0.5 kg/mol to 11 500 kg/mol and a set of well characterized broad polypropylene standards. All samples are prepared by dissolving 5 to 10 mg of polymer in 10 mL (at 160 °C) of stabilized TCB (same as mobile phase) and keeping for 3 hours with continuous shaking prior sampling in into the GPC instrument.

**Xylene cold soluble fraction (XCS wt%)**

The xylene cold soluble fraction (XCS) is determined at 23 °C according to ISO 6427.

**Average particle size (APS) and particle size distribution (PSD)** is measured with Coulter Counter LS200 at room temperature with 2-propanol as medium.

**Average particle size (APS) and particle size distribution (PSD)** is further determined by sieving the polymer powder according to ASTM D1921-06. The screen set consisted of screens having openings of 4.00 mm, 2.00 mm, 0.841 mm, 0.354 mm, 0.250 mm and 0.105 mm.

**Bulk density BD** is measured according ASTM D 1895

**Prepolymerisation degree**

Prepolymerisation degree is calculated by dividing the measured ash content of the prepolymer by the ash content of the dry catalyst.

PD[$g_{pol}/g_{cat}$] = ash content of prepolymer [ppm]/ash content of dry catalyst [ppm]

The ash content of the catalyst was measured by burning the catalyst at 750°C for 30 minutes, then cooling for 30 minutes and weighing.

The ash content of the catalyst used in the examples was 16.1wt%, which value was used in the calculation of the prepolymerisation degree.

**Al and Zr determination (ICP-method)**

The elementary analysis of a catalyst was performed by taking a solid sample of mass, M, cooling over dry ice. Samples were diluted up to a known volume, V, by dissolving in nitric acid ($HNO_3$, 65 %, 5 % of V) and freshly deionised (DI) water (5 % of V). The solution was then added to hydrofluoric acid (HF, 40 %, 3 % of V), diluted with DI water up to the final volume, V, and left to stabilise for two hours. The analysis was run at room temperature using a Thermo Elemental IRIS Advantage XUV Inductively Coupled Plasma - Atomic Excitation Spectrometer (ICP-AES) which was calibrated immediately before analysis using a blank (a solution of 5 % $HNO_3$, 3 % HF in DI water), a low standard (10 ppm Al in a solution of 5 % $HNO_3$, 3 % HF in DI water), a high standard (50 ppm Al, 20 ppm Zr in a solution of 5 % $HNO_3$, 3 % HF in DI water) and a quality control sample (20 ppm Al, 10 ppm Zr in a solution of 5 % $HNO_3$, 3 % HF in DI water). The content of zirconium was monitored using the 339.198 nm line, the content of aluminium via the 396.152 nm line and the potassium using the 766.490 nm line. The reported values, required to be between 0 and 100, or further dilution is required, are an average of three successive aliquots taken from the same sample and are related back to the original catalyst using equation 1.

$$C = \frac{R \times V}{M}$$

Equation 1

Where:

- C is the concentration in ppm, related to % content by a factor of 10,000
- R is the reported value from the ICP-AES
- V is the total volume of dilution in ml
- M is the original mass of sample in g

If dilution was required then this also needs to be taken into account by multiplication of C by the dilution factor.

## EXAMPLES

### Inventive Examples IE1 - IE2 AND Comparative examples CE1 - CE3:

Catalyst system based on complex: *rac*-cyclohexyl(methyl)silanediylbis[2-methyl-4-(4'-*tert*-butylphenyl)indenyl]zirconium dichloride

Preparation of catalyst system according to Example 1 of WO 2010/052263

In a jacketed 90 $dm^3$ glasslined stainless steel reactor the complex solution was prepared at - 5°C adding 0,85 kg of a 24.5 wt% PFPO ((2,2,3,3,4,4,5,5,6,6,7,7,8,8,9,9,9-heptadecafluorononyl)oxirane)/toluene solution very slowly (3.4 ml/min) to 13.5 kg 30wt% MAO(methylaluminoxane)/toluene solution. The temperature was increased to 25°C and the solution was stirred for 60 minutes. After addition of 210 g of the complex the solution was stirred for an additional two hours. That mixture was pumped at 5 l/h to the rotor stator with the rotor stator pair 4M. In the rotor stator with a tip speed of 4 m/s the mixture was mixed with a flow of 32 l/h of PFC (hexadecafluoro-1,3-dimethylcyclohexane) thus forming an emulsion. The droplets in the emulsion were solidified by an excess flow of 450 l/h PFC at a temperature of 76°C in a Teflon hose. The hose was connected to a jacketed 160 $dm^3$ stainless steel reactor equipped with a helical mixing element. In this reactor the catalyst particles were separated from the PFC by density difference. After the complex solution had been utilised the catalyst particles were dried in the 160 $dm^3$ reactor at a temperature of 70°C and a nitrogen flow of 5 kg/h for 7 h.

| | |
|---|---|
| mol ratio Co/M (Al/Zr): | 260 mol/mol |
| Mean particle size: | 26 $\mu$m |
| Zr content: | 0.53 wt-% |
| Al content: | 34.5 wt-% |

Preparation of catalyst composition in accordance with WO 2010/052263, Example 1:

The process of Example 1 of WO 2010/052263 has been repeated, but at 40°C and a pressure of 3.5 bar. The polymerisation degree was 3.6. The solid catalyst composition was a freely flowable powder.

Prepolymerisation step:

x g catalyst/h (see Table 1) were continuously fed to the prepolymerisation reactor (loop reactor, 50l) together with propylene (kg/h, see Table 1) and a hydrogen feed (g/h see Table 1). The reaction pressure, the temperature and the residence time are included in Table 1. The amount of pre-polymerised propylene (prepolymerisation degree) is also shown in Table 1.

The pre-polymerised catalyst was then continuously fed to a 450l loop reactor The propylene feed, hydrogen feed, reaction pressure, the temperature and the residence time are included in Table 1.

**Table 1:**

| Example | IE1 | IE2 | CE1 | CE2 | CE3 |
|---|---|---|---|---|---|
| **Prepolymerisation-Reactor** | | | | | |
| Temperature [°C] | 22.5 | 21.8 | 25.0 | 25.0 | 25.0 |
| Residence time [min] | 33 | 32 | 15 | 26 | 14 |
| Pressure [kPa] | 5509 | 5500 | 5676 | 5555 | 5235 |
| Catalyst feed [g/h] | 3.96 | 2.55 | 5.89 | 3.57 | 4.90 |
| Antistatic [ppm] | 27 | 17 | 12 | 21 | 14 |
| $H_2$-feed [g/h] | 0.46 | 3.01 | 0.35 | 0.48 | 4.57 |
| $C_3$-feed [g/h] | 45 | 47 | 100 | 57 | 102 |

(continued)

| Example | IE1 | IE2 | CE1 | CE2 | CE3 |
|---|---|---|---|---|---|
| **Prepolymerisation-Reactor** | | | | | |
| Slurry density [kg/$m^3$] | 493 | 497 | 491 | 486 | 487 |
| Bulk density [kg/$m^3$] | 493 | 434 | 500 | 469 | 496 |
| Average particle size [mm]* | 0.42 | 0.43 | 0.91 | 0.75 | 0.92 |
| Prepolymerisation degree [$g_{PP}/g_{cat}$] | 94.7 | 183.0 | 52.3 | 92.0 | 64.9 |
| $M_n$[kg/mol] | 4 | 3 | 4 | 4 | 4 |
| $M_w$[kg/mol] | 30 | 14 | 55 | 46 | 191 |
| MWD | 7.0 | 4.8 | 14.2 | 10.4 | 47.6 |
| ash [ppm] | 1700 | 880 | 3080 | 1750 | 2480 |
| **Loop-Reactor** | | | | | |
| Temperature [°C] | 75 | 75 | 74.6 | 75.0 | 75.0 |
| Pressure [kPa] | 5422 | 5426 | 5462 | 5409 | 5452 |
| $H_2$-feed [g/h] | 0.60 | 0.61 | 9.62 | 0.66 | 0.00 |
| $C_3$-feed [g/h] | 138 | 142 | 210 | 122 | 184 |
| $H_2/C_3$ ratio [mol/kmol] | 0.16 | 0.53 | 1.00 | 0.20 | 0.52 |
| Residence time [min] | 96 | 108 | 121 | 143 | 154 |
| Productivity [kg/g] | 9.87 | 11.15 | 5.79 | 9.13 | 7.01 |
| Bulk density [kg/$m^3$] | 461 | 473 | 378 | 434 | 430 |
| Average particle size [mm]* | 1.4 | 1.4 | 1.3 | 1.2 | 1.1 |
| XCS [wt%] | 0.42 | 0.85 | 1.5 | 0.72 | 1.2 |
| * Average particle size was determined by sieving the polymer powder according to ASTM D1921-06. | | | | | |

The examples show that contrary to the teachings of WO 2005/005495 and EP 1 939 226 prepolymerising a metallocene catalyst works at a temperature below 25°C and with a residence time above 30 min and yields prepolymerised metallocene catalysts which have a higher prepolymerisation degree, narrower MWD and lower average particle size compared to those, prepared according to the state of the art, e.g. according to WO 2005/005495. Furthermore it can be seen that using the prepolymerised metallocene catalysts prepared according to the present invention in polymer preparation yields polymers with low levels of XCS, higher bulk density and higher productivity.

## Claims

1. Process for producing a prepolymerised metallocene catalyst system comprising a step of prepolymerising in a continuously operating prepolymerising reactor a solid metallocene catalyst system with at least one $C_2$ to $C_{10}$-alpha-olefin monomer at an average residence time of the solid metallocene catalyst system of more than 30 minutes to 90 min at a temperature within the range of 5 to less than 25°C, in order to obtain a prepolymerised metallocene catalyst system comprising of from 60 to 500 g polyolefin/g catalyst.

2. Process according to claim 1, wherein the prepolymerised metallocene catalyst system has a molecular weight distribution in the range of 3 to 10.

3. Process according to claim 1 or 2, wherein the prepolymerised metallocene catalyst system has an average particle size in the range of 0.25 to 0.60 mm.

4. Process according to claims 1 to 3, wherein the prepolymerisation is a slurry polymerisation.

5. Process according to claim 4, wherein the polymerisation is carried out in a loop reactor.

6. Process according to any of the preceding claims 1 to 5, wherein the prepolymerisation is carried out in liquid monomer in the presence of a process additive, preferably an antistatic agent.

7. Process according to any of the preceding claims 1 to 6, wherein the prepolymerisation is carried out in the presence of hydrogen.

8. Process according to any of the preceding claims 1 to 7, wherein the alpha-olefin monomer for the prepolymerisation is ethylene or propylene and mixtures thereof, preferably propylene.

9. Process according to any of the preceding claims 1 to 8 wherein the solid metallocene catalyst system comprises

a) a transition metal compound of formula (I)

$$R_n(Cp')_2MX_2 \qquad (I)$$

wherein

"M" is zirconium (Zr) or hafnium (Hf),
each "X" is independently a monovalent anionic σ-ligand,
each "Cp' " is a cyclopentadienyl-type organic ligand independently selected from the group consisting of substituted cyclopentadienyl, substituted indenyl, substituted tetrahydroindenyl, and substituted or unsubstituted fluorenyl, said organic ligands coordinate to the transition metal (M),
"R" is a bivalent bridging group linking said organic ligands (Cp'),
"n" is 1 or 2, preferably 1 and

b) a cocatalyst (Co) comprising a compound of Al.

10. Process according to claim 9 wherein the solid metallocene catalyst system does not comprise any catalytically inert support material.

11. Process according to claim 9 or 10 wherein at least one olefin monomer is polymerised in the presence of the solid metallocene catalyst system before the prepolymerisation step of claim 1.

12. Prepolymerised metallocene catalyst system obtainable with a process according any of the preceding claims 1 to 11 with a molecular weight distribution in the range of 3 to 10 and an average particle size in the range of 0.25 to 0.60 mm.

13. Use of a prepolymerised metallocene catalyst system according to claim 12 in the production of a polymer.

14. Process for polymerising one or more alpha-olefins comprising the following steps: a) feeding a prepolymerised metallocene-based catalyst system obtained with a process according anyone of claims 1-10 into a polymerization reactor; b) polymerizing one or more alpha-olefins, the same or different from the alpha- olefins used in the process according to anyone of claims 1-10, in the presence of said prepolymerised metallocene-based catalyst system.

15. The process according to claim 13 wherein propylene is homopolymerised.

Europäisches Patentamt
European Patent Office
Office européen des brevets

# EUROPEAN SEARCH REPORT

Application Number
EP 10 16 7603

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | WO 95/32242 A1 (EXXON CHEMICAL PATENTS INC [US]) 30 November 1995 (1995-11-30)<br>* example 1 *<br>----- | 1-4,6,8, 9,11-14<br>5,7,10, 15 | INV.<br>C08F10/06<br>C08F4/659<br>C08F2/00 |
| X | US 5 240 894 A (BURKHARDT TERRY J [US] ET AL) 31 August 1993 (1993-08-31)<br>* example 3 4 *<br>----- | 1-4,6,8, 9,12-14 | |
| X | EP 2 050 771 A1 (MITSUI CHEMICALS INC [JP]; PRIME POLYMER CO LTD [JP]) 22 April 2009 (2009-04-22)<br>* paragraph [0261] *<br>* paragraph [0269] *<br>----- | 1-4,6,8, 9,11-14 | |
| X | US 6 187 880 B1 (WELCH M BRUCE [US] ET AL) 13 February 2001 (2001-02-13)<br>* see entry 4 of tab. 2claim 2 *<br>----- | 1-4,6,8, 9,12-14 | |
| X | US 5 534 473 A (WELCH M BRUCE [US] ET AL) 9 July 1996 (1996-07-09)<br>* example V VI *<br>----- | 1-4,6,8, 12-14 | TECHNICAL FIELDS SEARCHED (IPC)<br>C08F |
| X | US 2003/191254 A1 (DIEFENBACH STEVEN P [US]) 9 October 2003 (2003-10-09)<br>* example 2 *<br>----- | 1-4,6,8, 12-14 | |
| Y | WO 2005/005495 A2 (BASELL POLYOLEFINE GMBH [DE]; TONTI MARIA SILVIA [IT]; OBERHOFF MARKUS) 20 January 2005 (2005-01-20)<br>* page 17 *<br>* table 1 *<br>----- | 5,7,10, 15 | |
| Y | EP 1 939 226 A1 (BOREALIS TECH OY [FI]) 2 July 2008 (2008-07-02)<br>* examples 1,2 *<br>-----<br>-/-- | 7,10,15 | |

1

The present search report has been drawn up for all claims

| Place of search | Date of completion of the search | Examiner |
|---|---|---|
| The Hague | 8 December 2010 | Parry, Julian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 10 16 7603

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2010/052263 A1 (BOREALIS AG [AT]; HAKALA KIMMO [FI]; MANSNER ERIK [FI]; DENIFL PETER [) 14 May 2010 (2010-05-14)<br>* example 1 *<br>----- | 1-15 | |
| A | EP 1 661 924 A1 (MITSUI CHEMICALS INC [JP]) 31 May 2006 (2006-05-31)<br>* paragraph [0196] *<br>----- | 1-15 | |

TECHNICAL FIELDS SEARCHED (IPC)

The present search report has been drawn up for all claims

1

| Place of search | Date of completion of the search | Examiner |
|---|---|---|
| The Hague | 8 December 2010 | Parry, Julian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 16 7603

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2010

| Patent document cited in search report | | Publication date | Patent family member(s) | | | Publication date |
|---|---|---|---|---|---|---|
| WO 9532242 | A1 | 30-11-1995 | CA | 2191123 | A1 | 30-11-1995 |
| | | | CN | 1151172 | A | 04-06-1997 |
| | | | DE | 69533330 | D1 | 09-09-2004 |
| | | | DE | 69533330 | T2 | 14-07-2005 |
| | | | EP | 0760833 | A1 | 12-03-1997 |
| | | | ES | 2221667 | T3 | 01-01-2005 |
| | | | JP | 10503789 | T | 07-04-1998 |
| US 5240894 | A | 31-08-1993 | CA | 2135998 | A1 | 25-11-1993 |
| | | | DE | 69331098 | D1 | 13-12-2001 |
| | | | DE | 69331098 | T2 | 11-07-2002 |
| | | | EP | 0642536 | A1 | 15-03-1995 |
| | | | ES | 2167334 | T3 | 16-05-2002 |
| | | | JP | 3031633 | B2 | 10-04-2000 |
| | | | JP | 7508065 | T | 07-09-1995 |
| | | | WO | 9323439 | A2 | 25-11-1993 |
| EP 2050771 | A1 | 22-04-2009 | WO | 2008016059 | A1 | 07-02-2008 |
| | | | KR | 20090036142 | A | 13-04-2009 |
| | | | US | 2009291285 | A1 | 26-11-2009 |
| US 6187880 | B1 | 13-02-2001 | US | 6509427 | B1 | 21-01-2003 |
| US 5534473 | A | 09-07-1996 | US | 5594078 | A | 14-01-1997 |
| US 2003191254 | A1 | 09-10-2003 | NONE | | | |
| WO 2005005495 | A2 | 20-01-2005 | BR | PI0411942 | A | 15-08-2006 |
| | | | JP | 2009513724 | T | 02-04-2009 |
| | | | KR | 20060029247 | A | 05-04-2006 |
| | | | US | 2006160962 | A1 | 20-07-2006 |
| EP 1939226 | A1 | 02-07-2008 | NONE | | | |
| WO 2010052263 | A1 | 14-05-2010 | NONE | | | |
| EP 1661924 | A1 | 31-05-2006 | CN | 1839163 | A | 27-09-2006 |
| | | | WO | 2005019283 | A1 | 03-03-2005 |
| | | | JP | 2006057010 | A | 02-03-2006 |
| | | | KR | 20060052988 | A | 19-05-2006 |
| | | | TW | 247756 | B | 21-01-2006 |
| | | | US | 2006222849 | A1 | 05-10-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005005495 A
- EP 1939226 A
- WO 9733920 A
- WO 0021656 A
- WO 03051934 A
- WO 2006069733 A
- WO 0148034 A
- WO 2010052263 A
- WO 2006063771 A
- EP 0428054 A
- US 3262922 A
- WO 9858975 A
- WO 9858976 A
- WO 9858977 A
- EP 0173261 A
- US 4543399 A
- WO 0029452 A